(19) Europäisches Patentamt
European Patent Office
Office européen des brevets

(11) Numéro de publication: **0 041 003**
**B1**

(12) # FASCICULE DE BREVET EUROPEEN

(45) Date de publication du fascicule du brevet: **22.08.84**

(51) Int. Cl.³: **C 03 C 11/00**, C 03 C 3/04

(21) Numéro de dépôt: **81400752.2**

(22) Date de dépôt: **12.05.81**

(54) **Procédé de fabrication de produits expansés en verre.**

(30) Priorité: **14.05.80 FR 8010887**

(43) Date de publication de la demande:
**02.12.81 Bulletin 81/48**

(45) Mention de la délivrance du brevet:
**22.08.84 Bulletin 84/34**

(84) Etats contractants désignés:
**AT BE CH DE GB IT LI LU NL SE**

(56) Documents cités:
**DE - A - 2 046 973**
**US - A - 2 837 873**
**US - A - 3 974 315**

**JOURNAL OF THE AMERICAN CERAMIC SOCIETY, vol. 52, no. 9/10, 1979, Columbus, Ohio, US R.E. LOEHMAN: "Preparation and properties of yttrium-silicon-aluminum oxynitride glasses", pages 491-494**

(73) Titulaire: **ISOVER SAINT-GOBAIN, 63 rue de Villiers, F-92209 Neuilly-sur-Seine (FR)**

(72) Inventeur: **Garnier, Patrick Roger, 66, boulevard Garibaldi, F-75015 Paris (FR)**

(74) Mandataire: **Eudes, Marcel et al, Saint-Gobain Recherche 39 Quai Lucien Lefranc, F-93304 Aubervilliers Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 041 003 B1

ACTORUM AG

**Description**

L'invention concerne un procédé de fabrication de produits expansés en verre. Elle concerne aussi les produits expansés préparés par ce procédé, ainsi que certaines compositions de verres nitrurés particulièrement bien adaptées à la mise en œuvre dudit procédé.

Par «produits expansés en verre», on entend aussi bien des matériaux cellulaires tels que des mousses, que des microsphères creuses ou des granulats avec éclatement superficiel du produit multicellulaire.

On sait que la mousse de verre, sous forme de plaques, de briques ou de granulats, aussi bien que les microsphères creuses en verre, constituent un matériau de choix pour l'isolation thermique et phonique, car, outre leurs propriétés isolantes, elles présentent une bonne résistance mécanique et chimique et une bonne étanchéité aux gaz occlus, jusqu'à des températures pouvant atteindre 300°C. Les microsphères, en particulier, qui ont une faible masse volumique, sont utilisées pour alléger certaines matières plastiques et certains métaux ou alliages. Ces microsphères peuvent être élaborées par deux types de procédés connus.

Selon une première technique, on pulvérise en fines gouttelettes une solution silicatée, les gouttelettes étant d'abord séchées, puis vitrifiées à haute température. Ce type de procédé est dénommé «gel route» dans les brevets anglais ou américains qui le décrivent (voir, par exemple, le brevet U.S. 3699050). La résistance mécanique des microsphères élaborées de cette façon est en général moyenne. Cela tient principalement au fait que l'homogénéité du verre est elle-même d'une qualité moyenne, car la fusion de la composition et l'expansion du verre font lieu simultanément et en un temps très court. De plus, les compositions utilisables dans ce type de procédé sont pratiquement limitées aux seuls borosilicates.

Selon un second type de procédé, on procède en deux temps: on élabore d'abord à température relativement basse un verre contenant un gaz dissous en quantité assez importante, au moins égale à 10 $cm^3/cm^3$ dans les conditions «normales» de température et de pression, c'est-à-dire à 20°C et sous une pression d'une atmosphère; dans un second temps, le verre broyé, puis tamisé, est porté à haute température (1100°C–1400°C), dans une atmosphère adéquate, de façon à désolubiliser le gaz qui sert d'agent d'expansion pour le grain de verre ramolli. Un tel procédé, décrit par exemple dans le brevet U.S. n° 3365315, est limité aux seuls gaz pouvant être dissous chimiquement, tels que $O_2$, $SO_2$, $H_2O$, $F_2$, $CO_2$ et $H_2$, les gaz solubles seulement physiquement, tels que Ar ou He, étant exclus de cette application, car leur solubilité est insuffisante.

La résistance mécanique des microsphères ainsi préparées est en général excellente, du fait de la bonne homogénéité du verre préalablement élaboré, et les compositions des verres utilisables pour ce type de procédé sont nombreuses.

C'est à ce second type de procédé que se rattache l'invention.

Le procédé conforme à l'invention est fondé sur l'emploi d'un verre nitruré et sa mise en contact à température élevée avec de la vapeur d'eau.

Le procédé selon l'invention, plus précisément, consiste à chauffer jusqu'à l'état plastique des produits en un verre nitruré, contenant au moins 0,2% en poids d'azote et à les mettre alors en contact avec de la vapeur d'eau.

Les expériences effectuées ont établi que, par simple réglage de la pression partielle de la vapeur d'eau, ce procédé permet de maîtriser avec précision l'expansion du verre nitruré, méthode inefficace si l'on utilise un agent moussant autre que l'azote.

La désolubilisation de l'azote et l'expansion du verre qui en résulte ne sont pas provoquées par une manipulation thermique, mais par le contact du verre avec une certaine quantité de vapeur d'eau, selon un processus inconnu dans la technique antérieure. L'utilisation de vapeur d'eau constitue un moyen essentiel de l'invention, car, aussi longtemps que le verre chaud n'est en contact qu'avec de l'air sec ou de l'oxygène pur, on constate qu'il ne s'expanse partiquement pas.

La réaction d'hydrolyse du verre chaud, sur laquelle est fondé le procédé de l'invention, est probablement la suivante:

$$2\,N^{3-} + 3\,H_2O \rightarrow 3O^{2-} + N_2\nearrow + 3\,H_2\nearrow, \qquad (1)$$

la validité de l'invention n'étant toutefois pas tributaire de la validité de l'hypothèse de cette réaction.

On notera que cette réaction conduit à un volume d'hydrogène trois fois supérieur à celui de l'azote produit, mais, l'azote étant très peu soluble dans le verre oxydé par la vapeur d'eau et migrant très difficilement dans le verre chaud, une bulle d'azote, une fois créée, ne peut pratiquement plus disparaître par dissolution ou diffusion. L'hydrogène, par contre, migre rapidement dans le verre chaud et l'on ne retrouve pratiquement que de l'azote dans les pores des produits, notamment des microsphères, obtenus grâce à la réaction chimique (1) indiquée ci-dessus.

En outre, si l'on conduit cette expansion de manière que la désolubilisation de l'azote soit incomplète, le produit cellulaire obtenu présente encore une composition de verre nitruré, dont il se peut que les propriétés mécaniques et thermiques soient supérieures à celles du verre non nitruré correspondant.

Par ailleurs, la solubilité chimique initiale de l'azote étant notable dans les verres réduits, et même élevée dans certains d'entre eux, le rapport volume de gaz dégagé/volume de verre à expanser est élevé, de l'ordre de $10^2$ pour un verre à 2% en poids d'azote, ce qui permet d'effectuer une expansion dans une large gamme de volumes.

L'invention vise par conséquent à proposer un

moyen simple et facile à mettre en œuvre pour la fabrication de produits en verre expansé.

En outre, certains verres, notamment les verres à faible teneur en alcalins, qui se prêteraient très mal à une expansion par $SO_2$, du fait de la dépendance entre la solubilité de ce gaz et la teneur en alcalins, peuvent par contre être avantageusement utilisés pour la mise en œuvre de l'invention.

La nitruration du verre, préalablement à son expansion, peut être conduite de différentes manières, certaines connues en soi, d'autres étant nouvelles et entrant dans le cadre de la présente invention.

Une première façon, qui s'avère en pratique assez peu efficace, de dissoudre l'azote dans le verre, consiste à émettre des bulles d'azote (procédé dit de «bullage») dans le verre fondu réduit.

Un autre procédé consiste à incorporer dans les matières premières utilisées dans l'élaboration du verre un ou plusieurs composés nitrurés apportant l'azote, puis à fondre le mélange.

Une variante de ce procédé consiste à élaborer un verre contenant tous les éléments de la composition, à l'exception du ou des composés nitrurés, puis à broyer ce verre, à mélanger au calcin ainsi obtenu le ou les composés apportant l'azote, et enfin à faire fondre ce mélange.

Parmi les composés porteurs d'azote susceptibles d'être mis en œuvre pour l'obtention des verres nitrurés utilisés par l'invention, on citera tout d'abord le nitrure de silicium $Si_3N_4$, d'ailleurs déjà mentionné pour cet emploi comme conduisant, par exemple, à la dissolution de 1,2% en poids d'azote dans un verre silico-sodo-calcique par le document «Journal of American Ceramic Society», vol. 62, n° 9/10, 1979, pp. 491–494. Dans ce document cependant, comme dans l'ensemble de l'art antérieur, on ne trouve aucunement mentionné, ou même suggéré, le phénomène de l'expansion résultant de l'hydrolyse du verre à chaud, que met à profit la présente invention.

On peut avantageusement utiliser, en outre, le β'-sialon, de formule générale $Si_{6-z}Al_zO_zN_{8-z}$, avec $0<z\leq4{,}2$, ainsi que la cyanamide calcique $CaCN_2$.

Les deux premiers composés présentent l'avantage de rester stables en atmosphère neutre ou réductrice jusqu'à des températures élevées (environ 1700°C). La cyanamide calcique, par contre, n'est stable que jusque vers 1200°C, ce qui contraint à choisir des compositions de verre à point de fusion relativement bas.

Le β'-sialon, qui est une matière cristalline produite industriellement, est moins coûteux que le nitrure de silicium et se révèle donc le plus avantageux pour l'élaboration de verres nitrurés.

Cette application nouvelle du β'-sialon à l'élaboration d'un verre nitruré particulièrement bien adapté à la mise en œuvre du procédé conforme à l'invention constitue un autre objet de cette invention.

D'une façon générale, la dissolution chimique de l'azote dans du verre fondu, par substitution dans le réseau vitreux d'atomes d'azote trivalent à des atomes d'oxygène bivalent, s'effectue plus facilement et en quantité plus importante dans des verres acides que dans des verres basiques. On utilisera donc de préférence un verre contenant peu de métaux alcalins. En outre, on opèrera sous une atmosphère neutre ou réductrice.

Parmi les compositions verrières utilisables, on citera, à titre d'exemple non limitatif, le système $SiO_2-Al_2O_3-MgO$ avec, en % en poids, 45 à 57% de $SiO_2$, 15 à 28% de $Al_2O_3$ et 20 à 30% de MgO, et, en sus de 100%, 1 à 20% de β'-sialon avec z compris entre 0 et 4,2. On retiendra, en particulier, le voisinage du point triple spinelle-forstérite-cordiérite ($SiO_2$ : 52%, $Al_2O_3$ : 23%, MgO : 25%), qui conduit à des verres peu attaquables par l'aluminium fondu porté à 700°C (voir le brevet FR 1318800). Cette propriété est conservée lorsqu'on incorpore au verre jusqu'à 15% en poids de β'-sialon.

Après refroidissement et broyage du verre nitruré ainsi élaboré, la phase d'expansion ou de moussage de ce verre chauffé jusqu'à l'état plastique (environ 1300°C) peut être conduite:

– soit dans la flamme d'un brûleur, la vapeur d'eau nécessaire à l'expansion du verre étant alors apportée par la combustion du gaz;

– soit dans un four (tubulaire, par exemple), où la vapeur d'eau est produite par un générateur de vapeur d'eau sous faible pression;

– soit par projection de vapeur d'eau sur le verre.

L'épaisseur du produit à traiter et, en particulier, pour des particules de verre nitruré, leur granulométrie présentent une grande importance. Lorsque l'on utilise des particules de granulométrie fine (dimensions inférieures à 50 μm), on obtient des microsphères creuses monocellulaires, tandis que, pour une granulométrie grossière (dimensions comprises entre 50 μm et quelques mm), on obtient, dans des conditions de traitement identiques, des granulats multicellulaires, c'est-à-dire des particules à l'intérieur desquelles les cellules de gaz ne coalescent pas, tandis que celles qui sont en surface éclatent en donnant naissance à des parties fibreuses. L'invention n'est toutefois pas limitée au traitement de particules de verre et l'on peut également appliquer le procédé à l'expansion d'autres articles en verre, par exemple d'une fibre de verre filé, à l'état plastique, sur laquelle il suffit de projeter un jet de vapeur d'eau pour provoquer son gonflement en lui conférant une structure cellulaire.

Avant d'illustrer l'invention par des exemples détaillés de mise en œuvre, et afin de bien montrer en quoi elle se distingue de l'art antérieur, on rappellera, pour mémoire, que certains procédés de celui-ci, visant la fabrication de produits vitreux expansés, avaient déjà utilisé des matières premières porteuses d'azote. Les procédés décrits, par exemple, par les documents US-A-2837873 et USA-A-3974315, appliquaient à des pièces constituées d'un mélange pulvérulent de matériaux vitreux et de composés nitrogène (nitrures métalliques, oxynitrure de bore...) un traitement thermique approprié. En fait, ces procédés mettent en œuvre la technique classique de fabrication de

produits cellulaires selon laquelle, dans un premier temps du traitement thermique, les produits gazogènes se trouvent emprisonnés au sein de la masse vitreuse, la réaction gazogène produisant ensuite, directement, la structure cellulaire. Ils diffèrent donc totalement du procédé de l'invention qui fait appel à un verre nitruré affiné, produit de composition homogène, et lui applique un traitement d'hydrolyse à haute température. Ils ne se prêtent d'ailleurs guère, semble-t-il, à la fabrication de micro-sphères, mais plutôt de produits tels que briques d'isolation.

Par contraste, les exemples donnés maintenant, sans caractère limitatif, illustrent diverses caractéristiques originales de l'invention et un certain nombre de ces avantages.

Exemple 1

On prépare un mélange vitrifiable ayant, pour 100 kg de verre, la composition suivante:

| | |
|---|---|
| – Sable: | 27,1 kg, |
| – Alumine hydratée: | 57,0 kg, |
| – Carbonate de magnésium: | 37,6 kg, |
| – Nitrure de silicium: | 21,0 kg. |

A partir de ce mélange, on élabore à 1650°C un verre ayant la composition suivante, en % en poids:

| | |
|---|---|
| – $SiO_2$: | 27%, |
| – $Al_2O_3$: | 37%, |
| – MgO: | 15%, |
| – $Si_3N_4$: | 21% |

La fusion est conduite à l'air libre dans un creuset en graphite protégé par un pot d'alumine. On peut éventuellement rajouter au mélange 0,3% de carbone.

Par dosage à la microsonde électronique, on constate que le verre obtenu contient environ 6,5% en poids d'azote. Sa température de transition, Tg, (température à laquelle la viscosité est de $10^{13,3}$ poises), est égale à 880°C; sa microdureté Vickers est de 1030 ± 100 daN/mm², son module d'Young massique de 115 GN/m² et son cœfficient de dilatation est égal à $35 \times 10^{-7}$ $(°C)^{-1}$. La mesure de la résistance à l'attaque par l'eau par la méthode DGG donne un résidu de 6,5 mg pour 10 g de verre en poudre soumis à l'essai.

Après refroidissement, ce verre est broyé de façon à obtenir des grains de diamètre inférieur à 40 µm. Ces grains sont injectés au cœur d'un brûleur dont la flamme a une température voisine de 1300°C. On obtient des microsphères de diamètre inférieur à 100–150 µm et dont la masse volumique est de 0,20 g/cm³.

En variante, pour limiter les frais de broyage, on peut effectuer une «coulée à l'eau» de verre nitruré fondu, provoquant une première expansion et suivie d'un léger broyage, et tamisage, avant le traitement thermique sous vapeur d'eau.

En variante également, au lieu d'être injectés au cœur de la flamme d'un brûleur, les grains peuvent être simplement introduits dans un four tubulaire, qu'ils peuvent traverser en descendant ou, au contraire, entraînes de bas en haut par un courant gazeux (air et vapeur d'eau, par exemple). Une pression partielle de vapeur d'eau dans le four de l'ordre de 0,5 atmosphère conduit à des microsphères analogues à celles qui viennent d'être décrites.

Exemple 2

On prépare la composition vitrifiable suivante, pour 100 kg de verre:

| | |
|---|---|
| – Sable: | 52,1 kg, |
| – Acide borique anhydre: | 1,77 kg, |
| – Carbonate de magnésium: | 59,15 kg, |
| – Alumine hydratée: | 33,9 kg, |
| – Dolomie: | 2,7 kg. |

A partir de cette composition, on élabore à 1550°C, dans un creuset en platine ou en sillimanite, un verre ayant la composition suivante, en % en poids:

| | |
|---|---|
| – $SiO_2$: | 52%, |
| – $Al_2O_3$: | 22%, |
| – MgO: | 24%, |
| – CaO: | 1% |
| – $B_2O_3$: | 1% |

Ce verre est coulé à l'eau, broyé, mélangé à 12% en poids d'une poudre de β'-sialon (z = 3) et refondu à l'air libre, à 1550°C, dans un creuset en graphite protégé par un pot en alumine. Le verre résultant contient environ 2% en poids d'azote résiduel. Sa température de transition, Tg, est de 810°C; sa dureté Vickers est égale à, 770 daN/mm² et son cœfficient de dilatation à $43.10^{-7}$ $(°C)^{-1}$. Par ailleurs, ce verre présente un DGG de 5,4 mg et n'est pratiquement pas attaqué lorsqu'il est mis au contact d'aluminium fondu, a 700°C, pendant 3 jours.

Sa composition, en % en poids, est la suivante:

| | |
|---|---|
| – $SiO_2$: | 46,4%, |
| – $Al_2O_3$: | 19,7%, |
| – MgO: | 21,4%, |
| – CaO: | 0,9% |
| – $B_2O_3$: | 0,9% |
| – β'-sialon ($Si_3Al_3O_3N_5$): | 10,7% |

Ce verre est broyé de façon à obtenir des grains de diamètre inférieur à 40 µm, que l'on expanse de la même manière que dans l'exemple 1. Le diamètre des microsphères obtenues est inférieur à 200 µm. La masse volumique des microsphères obtenues varie de 0,15 à 0,30 g/cm³ selon le diamètre initial des particules et la pression partielle de la vapeur d'eau. Pour des microsphères de masse volumique moyenne de 0,20 g/cm³, la résistance à la pression hydrostatique est d'environ 70 bars. L'analyse par spectrométrie de masse des gaz contenus dans les microsphères donne les pourcentages volumiques suivants:

| | |
|---|---|
| – $N_2$: | 97,44%, |
| – NO: | 0,82%, |
| – $CO_2$: | 0,76%, |
| – $O_2$: | 0,74% |
| – $H_2$: | 0,20% |
| – Ar: | 0,04% |

L'invention propose donc un moyen simple pour expanser des produits en verre et, en particulier, pour élaborer des microsphères creuses, que l'on peut incorporer avec avantage comme

charges dans des matières plastiques ou métalliques, en vue de les alléger ou de modifier leurs propriétés physiques.

**Revendications**

1. Procédé de fabrication de produits en verre expansé, caractérisé en ce que l'on chauffe des produits en un verre nitruré contenant au moins 0,2% en poids d'azote jusqu'à ce qu'ils atteignent l'état plastique et en ce que l'on met alors lesdites produits en contact avec de la vapeur d'eau.

2. Procédé selon la revendication 1, caractérisé en ce que l'on maîtrise l'expansion du verre en réglant la pression partielle de la vapeur d'eau.

3. Procédé selon la revendication 2, caractérisé en ce que l'on règle la pression partielle de la vapeur d'eau et le temps de séjour des produits en verre dans cette vapeur de façon telle que la désolubilisation de l'azote soit incomplète, de manière à obtenir un verre cellulaire nitruré.

4. Procédé selon l'une des revendications 1 à 3, caractérisé en ce que le verre nitruré de départ a été élaboré sous atmosphère neutre ou réductrice.

5. Procédé selon l'une des revendications 1 à 4, caractérisé en ce que le verre nitruré de départ a été élaboré par bullage d'azote dans du verre fondu.

6. Procédé selon l'une des revendications 1 à 4, caractérisé en ce que le verre nitruré de départ a été élaboré en incorporant dans les matières premières de la composition verrière au moins un composé nitruré.

7. Procédé selon l'une des revendications 1 à 4, caractérisé en ce que le verre nitruré de départ a été élaboré en mélangeant à un calcin approprié au moins un composé nitruré et en fondant ensuite ce mélange.

8. Procédé selon l'une des revendications 6 à 7, caractérisé en ce que ledit composé est choisi dans le groupe comprenant le nitrure de silicium, le β'-sialon de formule $Si_{6-z}Al_zO_zN_{8-z}$, avec $O<z\leq4,2$, et la cyanamide calcique.

9. Procédé selon l'une des revendications 1 à 8, caractérisé en ce que le verre nitruré de départ ne contient qu'une faible teneur en métaux alcalins ou alcalino-terreux.

10. Procédé selon l'une des revendications 1 à 8, caractérisé en ce que le verre de départ appartient au système $SiO_2 - Al_2O_3 - MgO$ et comprend, de préférence, en % en poids, 45–57% de $SiO_2$, 15–28% de $Al_2O_3$ et 20–30% de MgO, l'azote étant compté en sus.

11. Procédé d'élaboration d'un verre nitruré, caractérisé en ce que l'on mélange aux matières premières d'élaboration du verre du β'-sialon, de formule $Si_{6-z}Al_zO_zN_{8-z}$, avec z compris entre 0 et 4,2, et en ce que l'on élabore ensuite le verre de façon connue en soi.

12. Procédé d'élaboration d'un verre nitruré, caractérisé en ce que l'on mélange à du calcin du β'-sialon, de formule $Si_{6-z}Al_zO_zN_{8-z}$, avec z compris entre 0 et 4,2, et en ce que l'on provoque ensuite la fusion de ce mélange.

13. Procédé selon l'une des revendication 1 à 10, caractérisé en ce que les produits en verre nitruré sont soumis à l'action de la vapeur d'eau par introduction dans la flamme d'un brûleur.

14. Procédé selon l'une des revendication 1 à 10, caractérisé en ce que les produits en verre nitruré sont soumis à l'action de la vapeur d'eau à l'intérieur d'un four alimenté en vapeur d'eau sous faible pression.

15. Procédé selon l'une des revendication 1 à 10, caractérisé en ce que les produits en verre nitruré sont soumis à l'action de la vapeur d'eau par projection sur ces produits d'un jet de vapeur.

16. Application d'un procédé selon l'une des revendications 1 à 10 et 13 à 15 à la production de microsphères creuses en verre, caractérisé en ce que les produits en verre nitruré à l'état plastique soumis à l'action de la vapeur d'eau sont des grains de verre d'une granulométrie inférieure à 50 µm.

17. Application d'un procédé selon l'une des revendication 1 à 10 et 13 à 15 à la production d'agrégats en verre, caractérisé en ce que les produits en verre nitruré à l'état plastique soumis à l'action de la vapeur d'eau sont des grains de verre d'une granulométrie comprise entre 50 µm et quelques millimètres.

18. Application des produits obtenus selon le procédé de fabrication de la revendication 10 comme charges pour pièces en aluminium.

**Patentansprüche**

1. Verfahren zur Herstellung von Produkten aus Schaumglas, dadurch gekennzeichnet, dass man Materialien aus einem nitridhaltigen Glas, welches mindestens 0,2 Gewichts-% Stickstoff enthält, erhitzt, bis sie den plastischen Zustand erreichen und dass man dann diese Materialien mit Wasserdampf in Kontakt bringt.

2. Verfahren nach Anspruch 1, dadurch gekennzeichnet, dass man durch Regeln des Partialdrucks des Wasserdampfes die Expansion des Glases beeinflusst.

3. Verfahren nach Anspruch 2, dadurch gekennzeichnet, dass man den Partialdruck des Wasserdampfes regelt und die Verweilzeit der Materialien aus Glas in diesem Dampf derart ist, dass die Auflösung des Stickstoffs unvollständig ist, so dass man ein zellenförmiges, nitridhaltiges Glas erhält.

4. Verfahren nach einem der Ansprüche 1 bis 3, dadurch gekennzeichnet, dass das nitridhaltige Ausgangsglas in einer neutralen oder reduzierten Atmosphäre erzeugt worden ist.

5. Verfahren nach einem der Ansprüche 1 bis 4, dadurch gekennzeichnet, dass das nitridhaltige Ausgangsglas durch ein Durchperlen von Stickstoff durch das Glas erzeugt worden ist.

6. Verfahren nach einem der Ansprüche 1 bis 4, dadurch gekennzeichnet, dass das nitridhaltige Ausgangsglas derart erzeugt worden ist, dass man zu den Ausgangsmaterialien der Glaszusammensetzung mindestens eine nitridhaltige Komponente zusetzt.

7. Verfahren nach einem der Ansprüche 1 bis 4,

dadurch gekennzeichnet, dass das nitridhaltige Ausgangsglas derart erzeugt worden ist, dass man einen geeigneten Glasbruch mit mindestens einer nitridhaltigen Komponente mischt und anschliessend dieses Gemenge aufschmilzt.

8. Verfahren nach Anspruch 6 oder 7, dadurch gekennzeichnet, dass die Komponente aus der Gruppe des Siliziumnitrids gewählt wird, das β'-Sialon der Zusammensetzung $Si_{6-z}Al_zO_zN_{8-z}$ mit $O<z\leq4{,}2$ und Kalziumcyanamid enthält.

9. Verfahren nach einem der Ansprüche 1 bis 8, dadurch gekennzeichnet, dass das nitridhaltige Ausgangsglas nur geringe Mengen an Alkalimetalle oder Erdalkalien enthält.

10. Verfahren nach einem der Ansprüche 1 bis 8, dadurch gekennzeichnet, dass das Ausgangsglas zu dem System $SiO_2 - Al_2O_3 - MgO$ und insbesondere in Gewichts-% 45–57% $SiO_2$, 15–28% $Al_2O_3$ und 20–30% MgO enthält, wobei der Stickstoff noch dazugezählt wird.

11. Verfahren zur Erzeugung eines nitridhaltigen Glases, dadurch gekennzeichnet, dass man den Rohstoffen zur Glaserzeugung das β'-Sialon der Zusammensetzung $Si_{6-z}Al_zO_zN_{8-z}$ mit z zwischen 0 und 4,2 zumischt und dass man anschliessend das Glas in bekannter Weise aufschmilzt.

12. Verfahren zur Erzeugung eines nitridhaltigen Glases, dadurch gekennzeichnet, dass man zu Glasbruch β'-Sialon mit der Zusammensetzung $Si_{6-z}Al_zO_zN_{8-z}$ mit z zwischen 0 und 4,2 zumischt und dass man danach den Schmelzvorgang dieser Mischung bewirkt.

13. Verfahren nach einem der Ansprüche 1 bis 10, dadurch gekennzeichnet, dass die Materialien aus nitridhaltigem Glas der Einwirkung von Wasserdampf ausgesetzt sind, der durch die Flamme eines Brenners eingeführt wird.

14. Verfahren nach einem der Ansprüche 1 bis 10, dadurch gekennzeichnet, dass die Materialien aus nitridhaltigem Glas der Einwirkung von Wasserdampf innerhalb eines Ofens ausgesetzt sind, dem Wasserdampf geringen Druck zugeführt wird.

15. Verfahren nach einem der Ansprüche 1 bis 10, dadurch gekennzeichnet, dass die Materialien aus nitridhaltigem Glas durch ein Aufschleudern eines Dampfstrahls der Einwirkung von Wasserdampf ausgesetzt sind.

16. Verwendung des Verfahrens nach einem der Ansprüche 1 bis 10 und 13 bis 15 zur Herstellung von kleinen Hohlperlen aus Glas, dadurch gekennzeichnet, dass die im plastischen Zustand der Einwirkung von Wasserdampf ausgesetzten Materialien aus nitridhaltigem Glas Glaskügelchen mit einer Korngrösse von unter 50 μ sind.

17. Verwendung des Verfahrens nach einem der Ansprüche 1 bis 10 und 13 bis 15 zur Herstellung von Zuschlagsstoffen aus Glas, dadurch gekennzeichnet, dass die im plastischen Zustand der Einwirkung von Wasserdampf ausgesetzten Materialien aus nitridhaltigem Glas Glaskügelchen mit Korngrössen zwischen 50 μ und einigen mm sind.

18. Verwendung der Produkte, die man nach dem Herstellungsverfahren gemäss Anspruch 10 erhält als Füllstoff für Teile aus Aluminium.

**Claims**

1. Process for the manufacture of expanded glass products, characterised in that nitrided glass products containing at least 0.2% by weight of nitrogen are heated until they have attained a plastic state, and in that the said products are then brought into contact with water vapour.

2. Process according to claim 1, characterised in that the expansion of the glass is controlled by regulating the partial pressure of the water vapour.

3. Process according to claim 2, characterised in that the partial pressure of the water vapour and the residence time of the glass products in this vapour are regulated in such a way that the dissolution of the nitrogen is incomplete, so to obtain a nitrided cellular glass.

4. Process according to any one of claims 1 to 3, characterised in that the nitrided glass starting material has ben elaborated in a neutral or reductive atmosphere.

5. Process according to any one of claims 1 to 4, characterised in that the nitrided glass starting material has been elaborated by bubbling nitrogen into the molten glass.

6. Process according to any one of claims 1 to 4, characterised in that the nitrided glass starting material has been elaborated by incorporating into the initial materials of the glass composition at least one nitrided compound.

7. Process according to any one of claims 1 to 4, characterised in that the nitrided glass starting material has been elaborated by mixing with an appropriate cullet at least one nitrided compound and by then melting this mixture.

8. Process according to either one of claims 6 and 7, characterised in that the said compound is chosen from the group including silicon nitride, the β'-sialon having the formula $Si_{6-z}Al_zO_zN_{8-z}$ with $O<z\leq4.2$ and calcium cyanamide.

9. Process according to any one of claims 1 to 8, characterised in that the nitrided glass starting material contains only a small proportion of alkali metal or alkaline earth metal.

10. Process according to any one of claims 1 to 8, characterised in that the glass starting material belongs to the system $SiO_2 - Al_2O_3 - MgO$ and preferably includes, in weight per cent, 45–57% of $SiO_2$, 15–28% of $Al_2O_3$ and 20–30% of MgO, the nitrogen being additional.

11. Process for the elaboration of a nitrided glass, characterised in that there are mixed with the initial materials for elaborating the glass β'-sialon, having the formula $Si_{6-z}Al_zO_zN_{8-z}$, with z between 0 and 4.2, and in that the glass is then elaborated in a manner known per se.

12. Process for the elaboration of a nitrided glass, characterised in that there is mixed with cullet β'-sialon, having the formula $Si_{6-z}Al_zO_zN_{8-z}$, with z between 0 and 4.2, and in that fusion of this mixture is then brought about.

13. Process according to any one of claims 1 to 10, characterised in that the nitrided glass products are submitted to the action of water vapour by introduction into a burner flame.

14. Process according to any one of claims 1 to 10, characterised in that the nitrided glass products are submitted to the action of water vapour in an oven supplied with water vapour under low pressure.

15. Process according to any one of claims 1 to 10, characterised in that the nitrided glass products are submitted to the action of water vapour by projecting onto these products a jet of steam.

16. Application of a process according to any one of claims 1 to 10 and 13 to 15 to the production of hollow glass microspheres, characterised in that the products of nitrided glass in the plastic state submitted to the action of water vapour are grains of glass having a granulometry less than 50 µm.

17. Application of a process according to any one of claims 1 to 10 and 13 to 15 to the production of glass aggregates, characterised in that the nitrided glass products in the plastic state submitted to the action of water vapour are grains of glass having a granulometry between 50 µm and a few millimetres.

18. Application of products obtained according to the process of manufacture of claim 10 as fillers for aluminium articles.